# EUROPEAN PATENT APPLICATION

(11) **EP 3 299 179 A1**
(43) Date of publication of application: **28.03.2018**
(21) Application number: 16795928.7
(22) Date of filing: 13.04.2016
(51) Int. Cl.: B60B 29/00, B66C 23/48, B60T 17/22, B25H 1/00, B25B 11/00

(54) **TOOL FOR CHANGING THE CALLIPERS IN DISC BRAKES**

(30) Priority: 21.05.2015 ES 201500354 U
(71) Applicant: Good Tool S.L., 09400 Aranda del Duero (Burgos) (ES)
(72) Inventor: RODRIGO GÓMEZ, Gonzalo, 09400 Aranfa del Duero Burgos (ES)
(74) Representative: Herrero & Asociados, S.L.
(86) International application number: PCT/ES2016/000046
(87) International publication number: WO 2016/185055

(57) **Abstract**

The invention relates to a tool for changing the callipers in disc brakes, comprising a base movable on wheels and comprises a counterweight, characterised in that a telescopic upright having a height adjuster projects in a perpendicular direction from the base, wherein said upright comprises an inverted L-shaped body in the upper part thereof, the ends of which are joined via a plate comprising a plurality of coupling screws, and wherein said plate can pivot relative to a pivot, that is adjustable in its inclination angle by means of an inclination adjuster.

## Description

### Object of the invention

The object of the present invention is a device for assembling and disassembling calipers of disc brakes on transportation vehicles, such as trailers or trucks, which makes them easy to replace, even by a single person.

### State of the art

One of the most common mechanical failures of road transportation vehicles, both for towing vehicles and trailers, is due to a failure in the disc brakes. Nowadays, to disassemble the calipers of the disc brakes on trailers or trucks, there are no tools that can be used to avoid having to manually assemble or disassemble the same. Furthermore, due to the weight of the parts involved in the labor, which range around 40kg, it is necessary that two people perform said assembly or disassembly.

Manual assembling or disassembling leads to serious problems, some of which include strain on the workers and the possibility of work-related accidents, since these parts, as was previously mentioned, are considerably heavy, making it recommendable that two mechanics perform the task, which is not always possible. Therefore, it is necessary to have a tool or device that allows the brake calipers to be changed without the physical labor of the worker involved.

### Description of the invention

The object of the present invention is a tool for changing the calipers of disc brakes on trailers or towing vehicles for land transport. This objective is achieved by means of the tool described in the independent claim that is attached to the present specification and which is incorporated herein as a reference to the same. The specific embodiments of the tool are described in the dependent claims that are likewise incorporated into the present description as a reference.

Thanks to the tool described, the technical problems related to changing or replacing calipers due to the heavy weight thereof are solved, and, furthermore, a new tool, unknown until now in the sector, is unveiled.

Throughout the description and the claims the word "comprise" and the variants thereof do not aim to exclude other technical characteristics, additions, components or steps. For those skilled in the art, other objects, advantages and characteristics of the invention may be deduced from both the description and the practical use of the invention. Furthermore, the present invention covers all of the possible combinations of particular and preferred embodiments indicated herein.

### Brief description of the figures

What follows is a very brief description of a series of drawings that aid in better understanding the invention, and which are expressly related to an embodiment of said invention that is presented by way of a non-limiting example of the same.

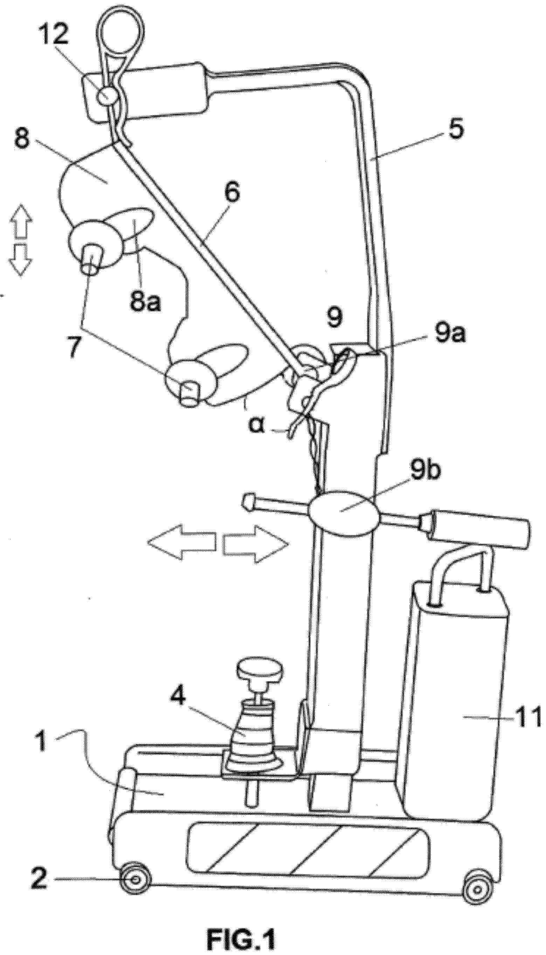

FIG 1 shows a view of the tool, object of the present invention.
FIG 2 shows a view of the tool in figure 1 with a brake caliper coupled to the same, in an operating position.

### Description of a detailed embodiment of the invention

As can be seen in the attached figures, the tool for changing calipers of a disc brake on road transportation vehicles, object of the present invention, comprises a base or support 1 that is mobile thanks to a plurality of wheels 2 arranged in such a way so as to facilitate the movement thereof throughout the workshop and facilitate the best position for changing the calipers 10.

Perpendicularly emanating from the aforementioned support is a telescopically adjustable neck 3 that can be adjusted by means of an adjuster 4, preferably of the type that screws, such that said neck 3 can face the caliper 10 in the best possible position before being changed.

The neck 3 comprises an inverted L-shaped body 5 at the top part thereof, the ends of which are joined by means of a plate 6 that comprises a plurality of coupling screws 7, two in this specific embodiment, placed between two parallel plates 8 with slotted holes 8a in order to allow for a better positioning of the coupling screws 7 in a position of use.

The plate 6 is foldable with respect to a folding axis 9 and adjustable in its angle of inclination (α) thanks to an adjuster that adjusts the inclination, in this specific embodiment being a bolt 9a in the folding axis 9 and a tensioner 9b arranged on the neck 3 and which adapts the position of the plate 6 when it folds with respect to the caliper 10 due to the fact that the tensioner 9b moves towards the plate 6 against the caliper 10 itself.

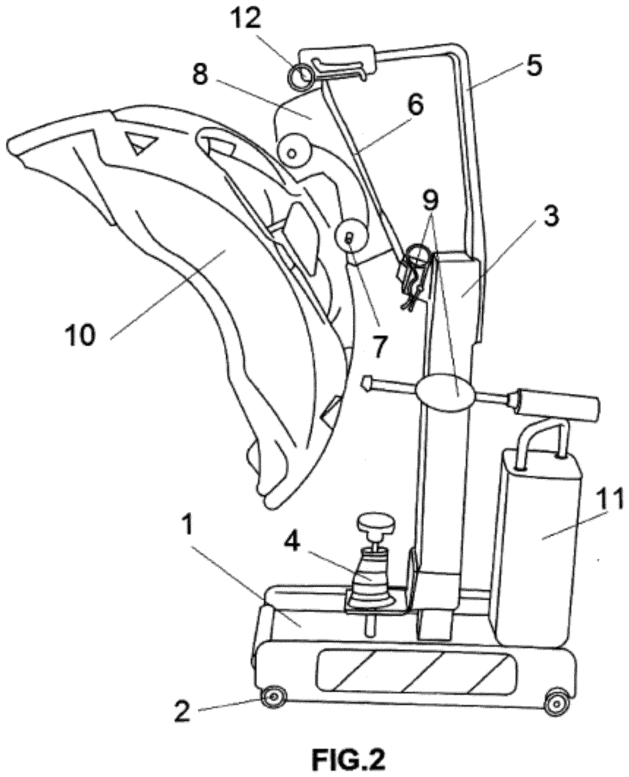

Figure 2 shows the tool with the caliper 10 coupled to the plate 6 by means of coupling screws 7 and fixed by a bolt at the top 12. The use of the tool is quite simple. After placing the tool close to the brake, the brake's air chamber is removed and the tool is placed facing the caliper 10 to subsequently remove the screws from the caliper. Once the screws joining the caliper 10 to the body of the brake are removed, the same is screwed to the plate 6 by means of the coupling screws 7, adjusting the height 4 and the inclination (α) using the height adjuster 4 and the inclination adjuster (9a, 9b) with respect to the folding axis 9. Once the caliper is fixed to the plate 6 of the tool, the same is then effortlessly removed, since the weight of the caliper is compensated for by a counterweight 11 arranged on the base 1.

Thus, thanks to the tool herein described, a single worker can effortlessly disassemble the caliper 10, since they only have to remove the screws from the caliper 10 and fix the same to the tool, the caliper 10 remaining in the position shown in figure 2. Obviously, when the tasks of repairing the brake are finished, the operation will be repeated, placing the caliper on the brake, removing the coupling screws 7 and placing the screws of the brake to complete the operation.

## Claims

1. A tool for changing the calipers of disc brakes comprising a mobile base (1) by means of wheels (2) and which comprises a counterweight (11), **characterized in that** emanating perpendicularly from the base (1) is a telescopic neck (3) that comprises a height adjuster (4) and wherein said neck (3) comprises an inverted L-shaped body (5) on the upper part thereof, the ends of which are joined by means of a plate (6) that comprises a plurality of coupling screws (7), and wherein said plate (6) is foldable with respect to a folding axis (9), the angle of inclination (α) of which is adjustable thanks to an inclination adjuster (9a, 9b).

2. The tool of claim 1 in which the coupling screws (7) are placed between two parallel plates (8) with slotted holes (8a).

3. The tool of any of claims 1-2 in which the inclination adjuster (9a, 9b) comprises a bolt (9a) in the folding axis (9) and a tensioner (9b) arranged on the neck (3).
